# FASCICULE DE BREVET EUROPEEN

(11) **EP 3 055 742 B1**
(45) Date de publication et mention de la délivrance du brevet: **04.04.2018**
(21) Numéro de dépôt: 14796218.7
(22) Date de dépôt: 06.10.2014
(51) Int. Cl.: G05B 19/18, B23Q 17/00, G06F 3/048, G06F 3/01, G02B 27/01

(54) **SYSTÈME DE COMMANDE D'UNE MACHINE INDUSTRIELLE À INTERFACE TACTILE INTÉGRÉE À UNE VITRE**
SYSTEM ZUR STEUERUNG EINER INDUSTRIELLEN MASCHINE MIT EINER IN EINE GLASSCHEIBE INTEGRIERTEN BERÜHRUNGSEMPFINDLICHEN SCHNITTSTELLE
SYSTEM FOR CONTROLLING AN INDUSTRIAL MACHINE COMPRISING A TOUCH INTERFACE INTEGRATED INTO A GLASS PANE

(30) Priorité: 10.10.2013 FR 1359867
(43) Date de publication de la demande: 17.08.2016
(73) Titulaire: Sidel Participations, 76930 Octeville-sur-Mer (FR)
(72) Inventeur: FEVRE, Sébastien, F-76930 Octeville Sur Mer (FR); BARRE, Anthony, F-76930 Octeville Sur Mer (FR)
(74) Mandataire: Grassin d'Alphonse, Emmanuel Jean Marie
(86) Numéro de dépôt international: PCT/FR2014/052525
(87) Numéro de publication internationale: WO 2015/052419

(56) Documents cités:
- EP-A1- 1 484 133
- EP-A1- 2 533 117
- US-A1- 2013 257 751
- Olwal A; Gustafsson J; Lindfors C: "Spatial augmented reality on industrial CNC-machines", Proceedings of the SPIE - The International Society for Optical Engineering, 14 février 2008 (2008-02-14), XP002724133, ISSN: 0277-786X, DOI: 10.1117/12.760960 Extrait de l'Internet: URL:http://proceedings.spiedigitallibrary. org/proceeding.aspx?articleid=810826 [extrait le 2014-05-09]
- BONINO D ET AL: "A blueprint for integrated eye-controlled environments", UNIVERSAL ACCESS IN THE INFORMATION SOCIETY ; INTERNATIONAL JOURNAL, SPRINGER, BERLIN, DE, vol. 8, no. 4, 11 March 2009 (2009-03-11), pages 311-321, XP019744028, ISSN: 1615-5297, DOI: 10.1007/S10209-009-0145-4

## Description

L'invention a trait à la commande des machines industrielles, notamment dans le domaine de la production ou la transformation d'articles manufacturés tels que des récipients.

Une ligne de production d'articles comprend généralement plusieurs machines réalisant chacune un certain nombre d'opérations contribuant à la fabrication des articles, les machines étant soit directement jointives, soit reliées par des transporteurs (typiquement des convoyeurs à tapis, à rouleaux, à pinces, etc.).

Chaque machine comprend des composants, également dénommés organes, remplissant chacun une fonction qui peut être :
- mécanique (typiquement manipulation, usinage, moulage),
- électrique/électromagnétique (typiquement fourniture de puissance, production de chaleur ou de froid, rayonnement),
- hydraulique/pneumatique (typiquement circulation fluidique),
- ou encore informatique (typiquement calcul, commande).

Ainsi, dans le domaine de la fabrication des récipients à partir de préformes en matière plastique, plusieurs machines sont impliquées. Un four assure la chauffe des préformes au moyen de sources de rayonnement infrarouge (typiquement des lampes halogènes ou des matrices de diodes laser) ; une souffleuse assure le formage des récipients au sein de moules à partir des préformes chauffées par injection d'un fluide (généralement de l'air) sous pression ; une remplisseuse assure l'introduction dans les récipients formés d'un contenu (généralement liquide ou pâteux) et le bouchage des récipients ainsi remplis ; une étiqueteuse assure enfin l'étiquetage des récipients remplis. D'autres fonctions encore peuvent être remplies par d'autres machines : alimentation des préformes, suremballage (formation de packs), palettisation.

Les composants de chaque machine sont ordinairement rassemblés dans un environnement de travail délimité par un bâti assurant le support rigide et l'indexation (c'est-à-dire le positionnement mutuel précis) des différents composants. Le bâti est généralement muni de parois qui remplissent au moins l'une des fonctions suivantes : isolation phonique, isolation thermique, protection des composants, protection des personnels. Ces parois peuvent être mobiles pour permettre un accès physique des personnels à l'environnement de travail (notamment pour permettre des opérations de maintenance). En outre, certaines au moins de ces parois peuvent être vitrées pour permettre un accès visuel à l'environnement de travail depuis une zone d'observation à l'extérieur du bâti, devant la vitre.

Les machines modernes sont munies de systèmes de commande informatisés qui comprennent une unité de contrôle maître dans laquelle sont programmées des fonctions globales de la machine, et des contrôleurs esclaves asservis à l'unité de contrôle maître et pilotant chacun un organe. Une interface homme-machine sous forme d'une console reliée à l'unité de contrôle maître est prévue pour permettre le pilotage humain de certaines au moins des fonctions des organes via leurs contrôleurs respectifs. Sur les machines les plus récentes, la console comprend un écran, qui peut être tactile (c'est-à-dire que l'écran intègre, outre les fonctions classiques d'affichage, des fonctions de commande par contact digital).

Par comparaison avec une console analogique comprenant des commandes à boutons, poussoirs, variateurs et sélecteurs, une console à écran offre l'avantage de la compacité, car l'opérateur peut n'afficher qu'une partie seulement des commandes, les autres demeurant masquées. Quant à la console à écran tactile, elle améliore tant l'ergonomie que la sécurité de la machine en permettant à l'opérateur d'économiser ses gestes et de se concentrer sur l'écran sans devoir se tourner fréquemment vers un clavier de commande séparé.

Cependant l'ergonomie n'est améliorée que partiellement, en raison de la taille, souvent trop petite, des écrans utilisés. La faible définition de l'affichage induit un mauvais confort visuel ainsi qu'une limitation des fonctionnalités affichées. L'usage d'écrans plus grands peut résoudre ces problèmes mais se heurte à la limitation de l'espace disponible autour des machines.

Le caractère peu intuitif des systèmes de commande connus impose d'éditer de copieux manuels et de former longuement les opérateurs, ce qui nuit à la productivité, surtout lorsque le renouvellement des opérateurs devient fréquent.

A = "Le document EP1484133 décrit une machine outils avec une interface graphique. Le document US2013257751 décrit l'interaction d'un doigt avec un objet virtuel, cette interaction étant détectée grâce au changement de couleur du doigt. Le document EP2533117 décrit un procédé d'aide au diagnostic de panne d'une installation industrielle".

Un premier objectif est d'améliorer substantiellement l'ergonomie des systèmes de commande des machines.

Un deuxième objectif est de rendre plus intuitives les opérations de commande des machines sur les consoles.

Un troisième objectif est d'améliorer le confort visuel des opérateurs sur les consoles des systèmes de commande.

A cet effet, il est proposé, en premier lieu, un système de commande selon la revendication 1.

La caméra est par exemple du type stéréoscopique, tandis que dans la base de données peut être mémorisé un modèle virtuel tridimensionnel de visage, incluant un point d'origine de la direction du regard, et que l'unité de contrôle maître est programmée pour effectuer, lors de l'étape de calcul de la direction du regard de l'opérateur, les opérations suivantes :
- détection, sur le visage de l'opérateur, de points de correspondance avec le modèle virtuel de visage,
- calcul des coordonnées spatiales des points de correspondance,
- calage spatial du modèle virtuel de visage sur les coordonnées des points de correspondance,
- calcul des coordonnées du point d'origine de la direction du regard,
- calcul des coordonnées d'un point d'impulsion digitale de l'opérateur sur l'interface graphique,
- à partir des coordonnées du point d'origine de la direction du regard et des coordonnées du point d'impulsion digitale de l'opérateur sur l'interface graphique, calcul de la droite joignant ces deux points.

Dans la base de données sont par exemple mémorisés des modèles tridimensionnels virtuels de chaque composant, et l'unité de contrôle maître peut alors être programmée pour afficher sur l'interface tactile le modèle virtuel de tout composant sélectionné, dans son panneau de commande.

Il est proposé, en deuxième lieu, une machine munie d'un bâti délimitant un environnement de travail incluant des composants fonctionnels de ladite machine, ce bâti portant une vitre transparente qui sépare l'environnement de travail d'une zone d'observation, cette machine étant en outre équipée d'un système de commande tel que présenté ci-dessus, dont l'interface tactile est intégrée à la vitre.

Il est proposé, en troisième lieu, un procédé de commande selon la revendication 7.

Selon un mode de réalisation, l'étape de calcul de la ligne de visée comprend les opérations suivantes :
- détection, sur le visage de l'opérateur, de points de correspondance avec un modèle virtuel de visage mémorisé ayant un point d'origine de la direction du regard,
- calcul des coordonnées spatiales des points de correspondance,
- calage spatial du modèle virtuel sur les coordonnées des points de correspondance,
- calcul des coordonnées du point d'origine de la direction du regard,
- calcul des coordonnées du point d'impulsion digitale de l'opérateur sur l'interface graphique,
- à partir des coordonnées du point d'origine de la direction du regard et des coordonnées du point d'impulsion digitale de l'opérateur sur l'interface graphique, calcul de la droite joignant ces deux points.

D'autres objets et avantages de l'invention apparaîtront à la lumière de la description d'un mode de réalisation, faite ci-après en référence aux dessins annexés dans lesquels :
- la figure 1 est une vue en perspective illustrant une machine munie d'une paroi vitrée sur laquelle un opérateur effectue des opérations de commande sur une interface graphique intégrée à la vitre ;
- la figure 2 est un diagramme illustrant de manière schématique l'architecture d'un système de commande de la machine ;
- la figure 3 est un schéma illustrant un principe de calcul d'une direction du regard de l'utilisateur et la sélection d'un composant par transparence au travers de la vitre à laquelle est intégrée l'interface graphique du système de commande ;

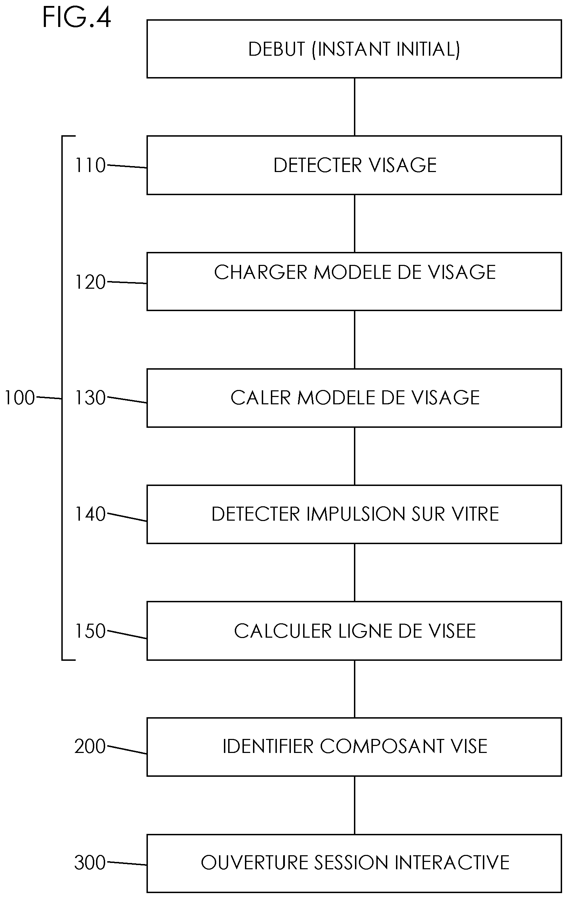

- la figure 4 est un diagramme illustrant diverses opérations conduites par le système de commande pour aboutir à l'affichage de fonctions interactives sur l'interface graphique intégrée à la vitre.

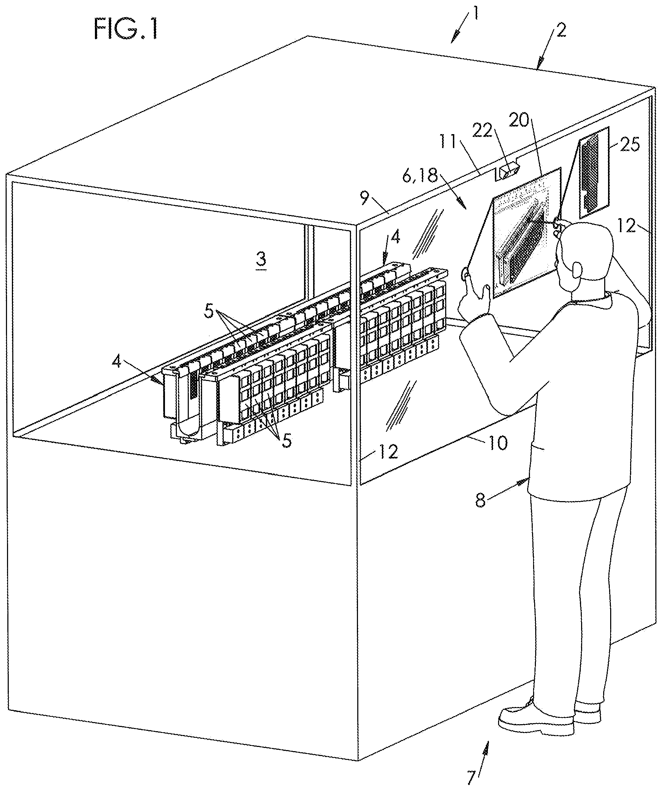

Sur la figure 1 est représentée une machine **1** industrielle dédiée à la production ou la transformation d'articles manufacturés. Cette machine **1** peut être individuelle ou être intégrée à une ligne de production.

Les articles manufacturés sont par exemple des récipients, typiquement fabriqués à partir de préformes en matière plastique tel que PET. Dans l'exemple illustré, la machine **1** assure une fonction de chauffe de préformes en PET en vue du formage subséquent de récipients par soufflage ou étirage soufflage.

Comme on le voit sur la figure 1, la machine **1** est munie d'un bâti **2** qui délimite un environnement **3** (ou volume) de travail dans lequel sont inclus des composants **4** fonctionnels de la machine **1.** Dans l'exemple illustré, parmi les composants **4** fonctionnels se trouve au moins une unité de chauffe de préformes telle que décrite par exemple dans la demande internationale WO 2013/076415 au nom de la demanderesse. On notera que cette unité de chauffe est ici présentée à titre purement illustratif.

Quoi qu'il en soit, chaque composant **4** fonctionnel comprend un certain nombre de pièces ayant entre elles des relations structurelles et/ou fonctionnelles. Typiquement, l'unité de chauffe illustrée sur la figure 1 comprend deux parois en vis-à-vis, comprenant chacune une série de modules **5** de chauffe juxtaposés intégrant un émetteur matriciel constitué d'une multitude de diodes laser émettant dans le domaine de l'infrarouge.

Comme on le voit sur la figure 1, le bâti **2** est vitré. Plus précisément, il porte au moins une vitre **6** transparente, qui sépare l'environnement **3** de travail d'une zone **7** d'observation extérieure à la machine **1,** dans laquelle un opérateur **8** peut circuler et depuis laquelle il peut avoir un accès visuel direct à l'environnement **3** de travail, c'est-à-dire à tout ou partie des composants **4** fonctionnels de la machine **1,** lorsque ces composants **4** ne sont pas cachés, depuis le point d'observation, par d'autres composants situés au premier plan.

Dans l'exemple illustré, la vitre **6** est montée sur un cadre **9** support intégré au bâti **2.** La vitre **6** s'étend depuis un bord **10** inférieur du cadre **9,** qui est situé de préférence plus bas que la ceinture d'un individu de taille moyenne (typiquement à une hauteur maximale d'environ 900 mm), jusqu'à un bord **11** supérieur qui est situé de préférence plus haut que la tête d'un tel individu (typiquement à une hauteur minimale de 1800 mm). La vitre **6** est par ailleurs délimitée latéralement par deux bords **12** latéraux qui relient le bord **10** inférieur au bord **11** supérieur.

La machine **1** est équipée d'un système **13** de commande configuré pour contrôler les composants **4.** A cet effet, le système **13** de commande comprend une unité **14** de contrôle maître comprenant un processeur **15** dans lequel sont implémentés divers programmes permettant d'assurer des fonctions de contrôle des composants **4,** et des contrôleurs **16** esclaves asservis à l'unité **14** de contrôle maître (et plus précisément au processeur **15** via une interface **17** de communication dédiée) et pilotant chacun un composant **4** fonctionnel. Ainsi, dans l'exemple illustré, à chacune des unités **4** de chauffe est associé un contrôleur **16** qui en pilote les différentes fonctions, tel que l'activation ou la désactivation d'un ou plusieurs module(s) **5** de chauffe, ou encore le réglage de la puissance délivrée ou encore de la longueur d'onde émise. A un niveau supérieur, l'unité **14** de contrôle maître peut par exemple être programmée pour contrôler (et régler) directement la vitesse de défilement des préformes au sein de chaque unité **4** de chauffe.

Le système **13** de commande comprend en outre une interface **18** graphique tactile reliée à l'unité **14** de contrôle maître (et plus précisément au processeur **15** via une interface **19** de communication dédiée), l'unité **14** de contrôle maître étant programmée pour afficher sur l'interface **18** tactile des panneaux **20** de commande des composants **4.**

Chaque panneau **20** de commande est virtuel et se présente par exemple sous forme d'une fenêtre incluant au moins une fonction interactive de commande du composant **4** correspondant, par exemple : mise en route, arrêt, ou diverses fonctions plus complexes de réglage, comme dans les exemples évoqués ci-dessus. L'unité **14** de contrôle maître est programmée pour contrôler le composant **4** associé au panneau **20** affiché (via son contrôleur **16**), en réponse à l'activation tactile (par apposition d'au moins un doigt de l'opérateur **8**) d'au moins une fonction interactive sur le panneau **20.**

Comme illustré sur la figure 1, l'interface **18** tactile est intégrée à la vitre **6** transparente qui sépare l'environnement **3** de travail de la zone **7** d'observation. Diverses techniques d'intégration d'une interface tactile à une vitre transparente sont connues et ont fait l'objet d'importants développements récents, en lien notamment avec les ordinateurs personnels (PC), les tablettes et les smartphones. Les plus courantes sont les technologies résistive et capacitive. Ces techniques supposent une instrumentation de la vitre elle-même. Diverses variantes existent : on connaît notamment la technologie par onde acoustique de surface et la technologie infrarouge, qui ne nécessitent pas d'instrumentation de la vitre elle-même mais se bornent à disposer des capteurs sur le pourtour de celle-ci pour détecter indirectement la position du doigt de l'utilisateur par les variations induites par le doigt dans le champ de pression acoustique (respectivement dans le champ électromagnétique) issu des bords de la vitre. Pour plus de détails, on pourra se référer notamment à la demande de brevet américain US 2007/0236618 (3M). Certaines de ces techniques permettent d'effectuer une détection de la proximité du doigt d'une surface (de l'ordre de quelques millimètres, voire quelques centimètres), sans que le doigt soit véritablement en contact avec cette surface. Pour des raisons évidentes de simplicité, dans la présente description les termes « contact » et « tactile » couvrent non seulement le contact effectif avec une surface, mais également la proximité avec cette surface, suffisante pour permettre la détection.

En l'espèce, l'unité **14** de contrôle maître est programmée pour afficher sur l'interface **18** des informations en lien avec la machine **1** elle-même, et plus particulièrement avec les composants **4** situés dans l'environnement **3** de travail.

Selon un mode particulier de réalisation, l'unité **14** de contrôle maître est programmée pour afficher un panneau d'invite dès lors qu'est détectée la moindre impulsion digitale de l'opérateur **8** en un point quelconque de la vitre **6.** Ce panneau d'invite inclut par exemple des commandes générales de la machine **1** ou de certains de ses composants **4** dont l'opérateur est habilité à contrôler le fonctionnement, ou encore des informations sur le statut général de la machine **1** ou de certains de ses composants **4.**

Néanmoins, suivant un mode de réalisation préféré, le système **13** de commande est conçu pour identifier directement, dès le contact tactile de l'utilisateur sur la vitre **6,** le (ou les) composant(s) **4** que l'opérateur **8** souhaite contrôler (ou commander).

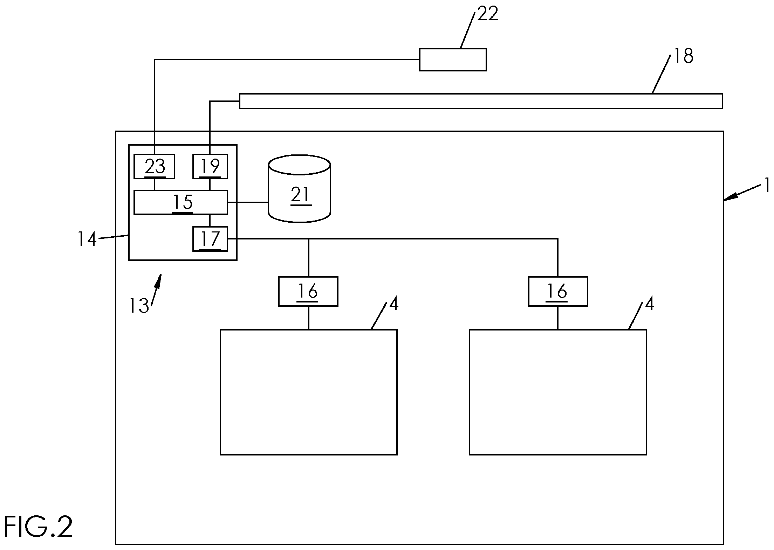

Dans cette configuration, et comme illustré sur la figure 2, le système **13** comprend une base **21** de données reliée à l'unité **14** de contrôle maître (et plus précisément au processeur **15**), dans laquelle sont mémorisées au moins les positions des composants **4** dans l'environnement **3** de travail. Selon un mode particulier de réalisation, la position d'un composant **4** peut être déterminée par les coordonnées d'au moins un point caractéristique associé au composant **4** (par ex. son centre de gravité, ou les sommets d'un parallélépipède virtuel dans lequel le composant **4** est inscrit).

Dans cette même configuration, le système **13** comprend en outre une caméra **22** pointant vers la zone **7** d'observation pour y détecter l'opérateur **8.** Cette caméra **22** est reliée à l'unité **14** de contrôle maître, via une interface **23** de communication dédiée.

Selon un mode préféré de réalisation, la caméra **22** est stéréoscopique, et configurée pour capturer simultanément deux images qui, à l'aide d'un traitement approprié au moyen d'un programme implémenté dans le processeur **15** de l'unité **14** de contrôle maître, permet de déterminer la position spatiale d'au moins une partie du corps de l'opérateur **8.**

En l'espèce, l'unité **14** de contrôle maître est programmée pour détecter, au moyen de la caméra **22,** le visage de l'opérateur **8** et les mouvements de celui-ci dans l'espace, à partir d'un instant (dit instant initial) où est détectée une action d'activation prédéterminée de l'opérateur **8.**

Cette action d'activation est de préférence une impulsion digitale de l'opérateur **8** sur l'interface **18** tactile, mais il pourrait s'agir d'un geste particulier non naturel mémorisé dans l'unité **14** de contrôle maître et appris par l'opérateur **8** (tel qu'un hochement de la tête, un mouvement circulaire de la main, etc.).

L'unité **14** de contrôle maître peut être programmée pour commander l'acquisition d'images par la caméra **22** en permanence, mais elle est de préférence programmée pour initier l'acquisition d'images à partir du moment où est détectée la présence d'un individu dans la zone **7** d'observation.

Cette détection peut être réalisée soit par la caméra **22** elle-même, qui intègre alors une fonction de détection de mouvement commandant la capture d'images, soit par un détecteur de mouvement dédié pointant vers la zone **7** d'observation, par exemple un détecteur infrarouge (qui détecte la présence par variation thermique), ou encore un détecteur volumétrique, qui détecte des volumes en mouvement.

Selon un mode préféré de réalisation, l'unité **14** de contrôle maître est programmée pour effectuer la séquence d'étapes présentées ci-après, à partir de l'instant initial.

Une première étape **100** consiste à déterminer une direction du regard de l'opérateur **8** en tenant compte de données issues de la caméra **22.**

Cette étape est par exemple effectuée grâce à une technique de reconnaissance faciale. Pour déterminer la direction du regard, l'unité **14** de contrôle maître effectue la séquence d'opérations suivantes.

Une première opération **110** consiste à détecter en temps réel le visage de l'opérateur grâce aux images stéréoscopiques issues de la caméra **22.** A partir de ces images, l'unité **14** de contrôle maître détecte par exemple, sur le visage de l'opérateur **8,** des points de correspondance avec un modèle **24** virtuel tridimensionnel de visage mémorisé dans la base **21** de données, et calcule en temps réel les coordonnées spatiales de ces points de correspondance. Ces points de correspondance sont par exemple des points aisément détectables sur un visage, tels que les sommets des pommettes, la base et le sommet du nez, le centre des orbites, les coins de la bouche, le centre du menton, le centre du front. Les calculs des coordonnées des points de correspondance sont de préférence rafraîchis en temps réel, par exemple à une cadence d'horloge inférieure à 100 ms.

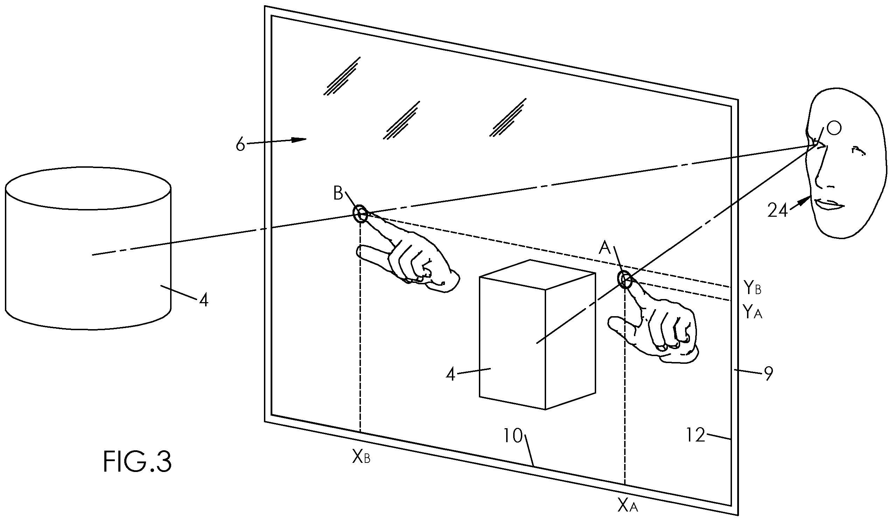

Le modèle **24** virtuel comprend lui aussi une série de points de correspondance mémorisés, ainsi qu'un point O, prédéterminé, d'origine de la direction du regard. Il s'agit par exemple d'un point confondu avec la base du nez (à mi-distance entre les yeux) ou, comme dans l'exemple illustré sur la figure 3, le centre d'une orbite, en l'espèce l'orbite de l'oeil droit (considéré comme directeur chez la majorité des individus).

Une deuxième opération **120** consiste à charger à partir de la base **21** de données le modèle **24** virtuel tridimensionnel de visage, tel que représenté sur la figure 3, puis une troisième opération **130** consiste à effectuer en temps réel un calage spatial du modèle **24** virtuel de visage sur les coordonnées des points de correspondance calculés précédemment à partir de la reconnaissance faciale. Ce calage spatial consiste à positionner le modèle **24** de visage virtuel de sorte que ses points de correspondance soient positionnés au plus proche des points de correspondance détectés sur le visage réel de l'opérateur **8.**

Une fois ce calage spatial effectué, l'unité **14** de contrôle maître dispose en temps réel d'une position et d'une orientation spatiale du modèle **24** virtuel de visage, qui correspondent respectivement, avec une bonne approximation, à la position et à l'orientation spatiale réelle du visage de l'opérateur **8.**

A partir de ces informations, l'unité **14** de contrôle maître peut alors calculer, en temps réel, les coordonnées du point O d'origine de la direction du regard sur le modèle **24** virtuel de visage.

Dès qu'est détectée (opération **140**) une impulsion digitale de l'opérateur **8** sur une face avant de la vitre **6,** tournée vers la zone **7** d'observation, l'unité **14** de contrôle maître calcule les coordonnées du point de la vitre où a été effectuée cette impulsion. Ce calcul peut être effectué d'une manière classique à partir des données fournies par les capteurs intégrés à la vitre (qu'ils soient notamment du type résistif ou capacitif). Ces capteurs fournissent en effet en temps réel une abscisse (notée X), mesurée sur le bord **10** inférieur, et une ordonnée (notée Z), mesurée sur un bord **12** latéral, à partir d'une origine confondue avec le point de rencontre du bord **10** inférieur et du bord **12** latéral.

Sur la figure 3, on a représenté à titre illustratif deux points différents d'impulsion sur la vitre **6,** à savoir, à droite, un point A (de coordonnées X_{A} et Y_{A}), et, à gauche, un point B (de coordonnées X_{B} et Y_{B}).

La coordonnée (notée Z) de profondeur de tout point d'impulsion digitale sur la vitre **6** est fournie par le positionnement de la face avant de la vitre **6** dans l'espace, telle que mémorisée dans l'unité **14** de contrôle maître (par exemple sous forme d'une équation paramétrique en coordonnées cartésiennes). Cette coordonnée de profondeur peut être déduite par calcul à partir de l'abscisse et de l'ordonnée de chaque point d'impulsion et à partir de l'équation paramétrique de la face avant de la vitre **6.** En variante, les calculs peuvent être simplifiés si la face avant de la vitre **6** est confondue avec un plan d'origine des coordonnées de profondeur (en d'autres termes si l'équation paramétrique de la face avant se réduit à Z=0).

L'unité **14** de contrôle maître dispose ainsi, en temps réel, des coordonnées spatiales du point O d'origine de la direction du regard de l'opérateur, telle que calculée ci-dessus, et des coordonnées du point d'impulsion digitale de l'opérateur (A ou B sur la figure 3) sur la vitre **6.**

A partir de ces coordonnées, l'unité **14** de contrôle maître calcule la droite joignant ces deux points (appelée ligne de visée), cette ligne de visée étant supposée confondue avec la vraie direction du regard de l'opérateur **8,** sur la base des hypothèses suivantes :
- l'opérateur **8** regarde un composant **4** à travers la vitre **6,**
- l'opérateur **8** pointe ce composant du doigt sur la vitre **6** en sorte que le point d'origine du regard (ici l'oeil droit), le point d'impulsion digitale (A ou B sur la figure 3) et le composant **4** visé sont tous trois alignés.

Dans l'exemple de la figure 3, on a schématisé deux composants **4** situés derrière la vitre (c'est-à-dire dans l'environnement de travail), tandis que l'opérateur **8,** matérialisé par le modèle **24** de visage virtuel
- dont la position et l'orientation sont calculées comme décrit précédemment - se trouve dans la zone **7** d'observation. Un premier composant **4** est schématisé sous forme d'un parallélépipède, le deuxième étant schématisé sous forme d'un cylindre. On voit que, pour une même orientation du visage, l'opérateur **8** peut regarder dans plusieurs directions. Il peut en particulier regarder en direction du composant **4** schématisé par le parallélépipède, ou en direction du composant **4** schématisé par le cylindre. Dans le premier cas, la droite OA, qui matérialise une première direction possible du regard, intersecte le composant **4** parallélépipédique. Dans le deuxième cas, la droite OB, qui matérialise une autre direction possible du regard, intersecte le composant **4** cylindrique.

Une fois le calcul de la ligne de visée effectué, l'unité **14** de contrôle maître effectue une étape **200** d'identification du (ou des) composant(s) situés dans la direction de la ligne de visée ainsi calculée, à partir des coordonnées mémorisées de l'ensemble des composants **4** dans la base **21** de données.

Cette identification peut être opérée par un simple calcul. Ainsi, lorsque les positions des composants **4** se réduisent aux coordonnées de leurs centres de gravité respectifs, l'identification d'un composant peut consister à sélectionner le centre de gravité le plus proche de la ligne de visée, et à en déduire le composant correspondant. Lorsque les positions des composants **4** sont fournies par les coordonnées des sommets de parallélépipèdes dans lequel sont inscrits les composants, l'identification du composant peut consister à sélectionner le parallélépipède qu'intersecte la ligne de visée. Ces calculs peuvent être effectués de manière simple dans un repère tridimensionnel cartésien à l'aide de l'équation paramétrique de la ligne de visée et des coordonnées desdits sommets.

L'unité **14** de contrôle maître effectue alors une étape **300** d'ouverture d'une session interactive avec l'opérateur **8** en affichant, sur l'interface **18** tactile, au moins un panneau de commande du composant **4** ainsi identifié. Lorsque plusieurs composants **4** ont été identifiés, l'unité **14** de contrôle maître peut :
- soit effectuer une discrimination d'office en affichant le panneau **20** de commande du composant **4** situé au premier plan du point de vue de l'opérateur **8** (c'est-à-dire le plus proche de la vitre **4**),
- soit afficher une fenêtre d'invite listant l'ensemble des composants **4** identifiés pour permettre à l'opérateur **8** de sélectionner, de manière tactile, le composant **4** de son choix, l'unité **14** de contrôle maître affichant ensuite le panneau **20** de commande du composant **4** ainsi choisi.

Selon un mode de réalisation préféré, des modèles tridimensionnels virtuels de chaque composant **4** sont mémorisés dans la base **21** de données, et l'unité **14** de contrôle maître est programmée pour afficher sur l'interface **18** tactile le modèle virtuel tridimensionnel de tout composant **4** sélectionné, dans son panneau **20** de commande.

Ce modèle virtuel tridimensionnel est par exemple un fichier de pièce ou d'assemblage, chargeable dans un environnement de dessin assisté par ordinateur (DAO) ou de conception assistée par ordinateur (CAO) tel que SolidWorks® ou Catia®. Des extensions de fichiers possibles sont par exemple .prt, .sldprt, .asm (formats natifs SolidWorks), ou encore .catpart, .catproduct (formats natifs Catia).

Le modèle virtuel affiché est de préférence fonctionnel, c'est-à-dire qu'il intègre des fonctions interactives qui peuvent être sélectionnées de manière tactile, telles que la sélection de pièces dans un assemblage, le réglage de paramètres du composant ou de pièces de celui-ci.

Ainsi, à titre d'illustration, on a représenté sur la figure 1 l'affichage, dans un premier panneau **20** de commande, d'un modèle tridimensionnel de l'unité **4** de chauffe sélectionnée au doigt (en l'espèce l'index de la main gauche), à travers la vitre **6,** par l'opérateur **8.** Par la procédure décrite ci-dessus, l'unité **14** de contrôle maître a calculé la ligne de visée, détecté le composant **4** situé dans la ligne de visée (l'unité de chauffe) et sélectionné son modèle dans la base **21** de données. Ce modèle est alors chargé et affiché directement sur la vitre **6** dans un panneau **20** de commande, avec diverses fonctions interactives.

En l'espèce, l'opérateur **8** souhaite effectuer un réglage sur un module **5** de chauffe. Il peut alors sélectionner le module de manière tactile par apposition d'un doigt (ici l'index de la main gauche) directement sur le modèle correspondant du module intégré au modèle d'assemblage tridimensionnel de l'unité **4** de chauffe, ou encore (comme illustré) dans une zone déportée d'accès aux réglages de ce module **5.** Dans ce cas, le programme de l'unité **14** de contrôle maître peut prévoir l'ouverture d'un panneau **25** secondaire de commande associé au module de chauffe, incluant des fonctions interactives correspondantes, telles que l'allumage ou l'extinction de groupes de diodes, le réglage de la puissance émise, etc.

La sélection de toute fonction interactive est alors traitée par l'unité **14** de contrôle maître qui agit, via les contrôleurs, sur le composant **4** ou ses sous-composants.

Le système **13** de commande qui vient d'être décrit offre les avantages suivants.

Premièrement, il présente, par rapport aux systèmes de commande connus à console séparée, des progrès substantiels en matière d'ergonomie. L'opérateur accède en effet directement aux fonctions de commande de la machine sur la vitre de celle-ci, sans la perdre de vue.

Deuxièmement, la sélection directe des composants, par transparence au travers de la vitre, rend les opérations de commande de la machine beaucoup plus intuitive, au bénéfice la simplicité et de la rapidité de la maintenance. Ce caractère intuitif permet également de limiter le temps de formation des opérateurs.

Troisièmement, l'affichage direct sur la vitre du bâti permet d'améliorer le confort visuel des opérateurs.

Quatrièmement, l'accès visuel aux composants **4** depuis la zone **7** d'observation permet à un opérateur seul d'effectuer l'ensemble des opérations de commande (notamment de rodage) nécessitant habituellement l'intervention de deux opérateurs dont l'un effectue les opérations de commande sur la console, tandis que l'autre effectue le contrôle visuel in situ au sein de la machine elle-même.

Diverses variantes peuvent être envisagées sans sortir du cadre qui vient d'être décrit.

Premièrement, il est envisageable d'intégrer au système **13** des fonctionnalités d'authentification de l'utilisateur par biométrie. La biométrie permet de réaliser un contrôle (et éventuellement une restriction) de l'accès des utilisateurs à la commande de la machine **1** via le système **13.** L'authentification de l'utilisateur peut par exemple mettre à profit la technique de reconnaissance faciale de l'opérateur **8** décrite ci-dessus ; cependant, une telle authentification peut nécessiter une numérisation complète du visage, plus complexe qu'une simple détection de points de correspondance. Dans ce cas, on peut recourir à des techniques de numérisation tridimensionnelle telle que celle décrite dans B. Ben Amor, Contributions à la modélisation et à la reconnaissance faciales 3D, thèse de l'Ecole Centrale de Lyon, 2006, (cf. notamment le chapitre 4).

Plus précisément, dans ce cas la base **21** de données contient une série de profils utilisateurs, à chacun desquels est associé un visage, qui peut être déterminé par une pluralité de points de correspondance prédéterminés, caractéristiques du visage. Chaque profil contient notamment la liste des droits accordés à l'utilisateur sur la commande de la machine **1.** A la manière ordinaire des réseaux informatiques, ces droits peuvent être définis de manière hiérarchique selon les opérations autorisées ou non. Typiquement, on pourra ainsi définir :
- un profil « simple utilisateur » donnant un certain nombre de droits sur la commande de la machine **1,** incluant la modification ordinaire de certains paramètres internes aux composants **4,** l'affichage de l'état de ceux-ci, etc. ;
- un profil « administrateur » recouvrant les droits du simple utilisateur et donnant en outre des droits plus étendus sur la machine **1,** incluant par exemple la mise en route, l'arrêt, le paramétrage complet de la machine **1** en vue d'un changement de gamme de produits, etc. ;
- un profil « expert » donnant recouvrant les droits de l'administrateur et donnant en outre des droits sur la définition des profils (typiquement l'ajout ou la suppression de droits pour les utilisateurs, la modification, l'ajout ou la suppression de profils, etc.).

Grâce à cette biométrie, une comparaison du visage de l'opérateur **8** avec des visages mémorisés dans la base **21** de données peut être programmée lors de l'activation du système **13,** préalablement à l'ouverture de la session interactive, afin de sélectionner le profil correspondant au visage détecté et ouvrir les droits correspondants.

Deuxièmement, il est envisageable de remplacer la caméra **22** par tout autre dispositif de détection (ou d'acquisition) de formes tridimensionnelles. Un tel dispositif comprend par exemple une série de capteurs capacitifs positionnés autour de la zone **7** d'observation pour y détecter la présence de l'opérateur **8** et effectuer les opérations de reconnaissance faciale.

Troisièmement, il est envisageable de prévoir des fonctionnalités de contrôle par l'opérateur **8** de zones de la machine **1** qui lui sont inaccessibles au regard. A cet effet, la machine **1** peut être équipée de caméras de surveillance pointant vers des parties cachés ou inaccessibles des composants **4.** Dans ce cas, l'unité **14** de contrôle maître peut être programmée pour afficher sur l'interface **18,** en tant que fonction interactive, et à la demande de l'opérateur **8,** une fenêtre dans laquelle s'affiche une vidéo issue d'une caméra de surveillance, afin de permettre à l'opérateur de vérifier le bon fonctionnement d'un composant **4** (ou au contraire d'identifier un problème affectant ce composant **4**) dans une zone visuellement ou physiquement inaccessible.

## Revendications

1. Système (**13**) de commande d'une machine (**1**) munie d'un bâti (**2**) délimitant un environnement (**3**) de travail incluant des composants (**4**) fonctionnels de ladite machine (**1**), ce bâti (**2**) portant une vitre (**6**) transparente qui sépare l'environnement (**3**) de travail d'une zone (**7**) d'observation, ce système (**13**) incluant :
- une unité (**14**) de contrôle maître ;
- des contrôleurs (**16**) esclaves asservis à l'unité (**14**) de contrôle maître et pilotant chacun un composant (**4**) fonctionnel ;
- une interface (**18**) graphique tactile reliée à l'unité (**14**) de contrôle maître et intégrée à la vitre (**6**) de la machine (**1**), l'unité (**14**) de contrôle maître étant programmée pour afficher sur l'interface (**18**) des panneaux (**20**) de commande des composants (**4**), incluant chacun au moins une fonction interactive de commande du composant (**4**) correspondant, et pour contrôler le composant (**4**) via son contrôleur (**16**) en réponse à l'activation tactile d'au moins une fonction interactive ;
ce système (**13**) de commande étant **caractérisé en ce qu'**il comprend :
- une base (**21**) de données dans laquelle sont mémorisées au moins les positions des composants (**4**) dans l'environnement (**3**) de travail ;
- un dispositif (**22**) d'acquisition de formes pour détecter un opérateur (**8**) dans la zone (**7**) d'observation ;
- et **en ce que** l'unité (**14**) de contrôle maître est programmée pour effectuer la séquence d'étapes suivantes à partir d'un instant où est détectée une action d'activation prédéterminée de l'opérateur (**8**) :
∘ calculer une ligne de visée correspondant à une direction du regard de l'opérateur (**8**) en tenant compte de données issues du dispositif (**22**) d'acquisition de formes ;
∘ à partir des positions mémorisées des composants (**4**) et de la ligne de visée calculée, identifier au moins un composant (**4**) situé dans la ligne de visée ;
∘ afficher sur l'interface (**18**) graphique au moins un panneau (**20**) de commande du composant (**4**) identifié.

2. Système (13) de commande selon la revendication 1, **caractérisé en ce qu'**il comprend :
- des modèles tridimensionnels virtuels de chaque composant (4) mémorisés dans la base (21) de données,
l'unité (14) de contrôle maître étant programmée pour afficher sur l'interface (18) tactile le modèle virtuel de tout composant (4) sélectionné, dans son panneau (20) de commande.

3. Système (13) selon la revendication 2, **caractérisé en ce que** le dispositif (22) d'acquisition de formes est une caméra stéréoscopique pointant vers la zone (7) d'observation.

4. Système (13) selon l'une des revendications 1 à 3, **caractérisé en ce que** dans la base (21) de données est mémorisé un modèle (24) virtuel tridimensionnel de visage, incluant un point (O) d'origine de la direction du regard, et **en ce que** l'unité (14) de contrôle maître est programmée pour effectuer, lors de l'étape de calcul de la ligne de visée correspondant à la direction du regard de l'opérateur (8), les opérations suivantes :
- détection, sur le visage de l'opérateur, de points de correspondance avec le modèle (**24**) virtuel de visage,
- calcul des coordonnées spatiales des points de correspondance,
- calage spatial du modèle (**24**) virtuel de visage sur les coordonnées des points de correspondance,
- calcul des coordonnées du point (O) d'origine de la direction du regard,
- calcul des coordonnées d'un point d'impulsion digitale de l'opérateur sur l'interface (**18**) graphique,
- à partir des coordonnées du point (O) d'origine de la direction du regard et des coordonnées du point d'impulsion digitale de l'opérateur (**8**) sur l'interface (**18**) graphique, calcul de la droite joignant ces deux points.

5. Système (13) selon l'une des revendications 1 à 4, **caractérisé en ce que** l'action d'activation prédéterminée est une impulsion digitale de l'opérateur (8) sur l'interface (18) graphique.

6. Machine (1) munie d'un bâti (2) délimitant un environnement (3) de travail incluant des composants (4) fonctionnels de ladite machine (1), ce bâti (2) portant une vitre (6) transparente qui sépare l'environnement (3) de travail d'une zone (7) d'observation, cette machine (1) étant **caractérisée en ce qu'**elle est équipée d'un système (13) de commande **selon l'une des revendications précédentes,** dont l'interface (18) tactile est intégrée à la vitre (6).

7. Procédé de commande d'une machine (1) munie d'un bâti (2) délimitant un environnement (3) de travail incluant des composants (4) fonctionnels de ladite machine (1), ce bâti (2) portant une vitre (6) transparente qui sépare l'environnement (3) de travail d'une zone (7) d'observation, ce procédé étant **caractérisé en ce qu'**il comprend les étapes suivantes :
- détecter le visage d'un opérateur (**8**) ;
- calculer une ligne de visée correspondant à une direction du regard de l'opérateur (**8**) ;
- à partir de positions mémorisées des composants (**4**) et de la ligne de visée calculée, identifier au moins un composant (**4**) situé dans la ligne de visée ;
- afficher sur une interface (**18**) graphique intégrée à la vitre (**6**) au moins un panneau (**20**) de commande ainsi que le modèle virtuel tridimensionnel du composant (**4**) identifié.

8. Procédé de commande selon la revendication 7, **caractérisé en ce que** l'étape de calcul de la ligne de visée comprend les opérations suivantes :
- détection, sur le visage de l'opérateur (**8**), de points de correspondance avec un modèle (**24**) virtuel de visage mémorisé ayant un point (O) d'origine de la direction du regard,
- calcul des coordonnées spatiales des points de correspondance,
- calage spatial du modèle (**24**) virtuel sur les coordonnées des points de correspondance,
- calcul des coordonnées du point (O) d'origine de la direction du regard,
- calcul des coordonnées d'un point d'impulsion digitale de l'opérateur (**8**) sur l'interface (**18**) graphique,
- à partir des coordonnées du point (O) d'origine de la direction du regard et des coordonnées du point d'impulsion digitale de l'opérateur (**8**) sur l'interface (**18**) graphique, calcul de la droite joignant ces deux points.

9. Procédé de commande selon la revendication 7 ou la revendication 8, **caractérisé en ce qu'**il comprend une étape de comparaison du visage de l'opérateur (8) avec une série de visages mémorisés.

## Patentansprüche

1. System (13) zur Steuerung einer Maschine (1), die mit einem Gestell (2) versehen ist, welches eine Arbeitsumgebung (3) begrenzt, die Funktionsbauteile (4) der Maschine (1) umfasst, wobei dieses Gestell (2) eine durchsichtige Glasscheibe (6) trägt, die die Arbeitsumgebung (3) von einem Beobachtungsbereich (7) trennt, wobei dieses System (13) umfasst:
- eine Master-Kontrolleinheit (14);
- Slave-Kontroller (16), die von der Master-Kontrolleinheit (14) abhängig sind und je ein Funktionsbauteil (4) steuern;
- eine berührungsempfindliche grafische Schnittstelle (18), die mit der Master-Kontrolleinheit (14) verbunden und in die Glasscheibe (6) der Maschine (1) integriert ist, wobei die Master-Kontrolleinheit (14) programmiert ist, auf der Schnittstelle (18) Steuerfelder (20) der Bauteile (4) anzuzeigen, die je mindestens eine interaktive Steuerfunktion des entsprechenden Bauteils (4) umfassen, und um das Bauteil (4) über seinen Kontroller (16) als Reaktion auf die berührungsempfindliche Aktivierung mindestens einer interaktiven Funktion zu kontrollieren;
wobei dieses Steuersystem (13) **dadurch gekennzeichnet ist, dass** es enthält:
- eine Datenbank (21), in der mindestens die Stellungen der Bauteile (4) in der Arbeitsumgebung (3) gespeichert sind;
- eine Formerfassungsvorrichtung (22), um einen Bediener (8) im Beobachtungsbereich (7) zu erfassen;
- und dass die Master-Kontrolleinheit (14) programmiert ist, die Sequenz folgender Schritte ausgehend von einem Zeitpunkt auszuführen, in dem eine vorbestimmte Aktivierungsaktion des Bedieners (8) erfasst wird:
o Berechnen einer Sichtlinie entsprechend einer Blickrichtung des Bedieners (8) unter Berücksichtigung von von der Formerfassungsvorrichtung (22) stammenden Daten;
o ausgehend von den gespeicherten Stellungen der Bauteile (4) und der berechneten Sichtlinie Erkennen mindestens eines in der Sichtlinie befindlichen Bauteils (4);
o Anzeigen auf der grafischen Schnittstelle (18) mindestens eines Bedienungsfelds (20) des erkannten Bauteils (4).

2. Steuersystem (13) nach Anspruch 1, **dadurch gekennzeichnet, dass** es enthält:
- virtuelle dreidimensionale Modelle jedes in der Datenbank (21) gespeicherten Bauteils (4),
wobei die Master-Kontrolleinheit (14) programmiert ist, auf der berührungsempfindlichen Schnittstelle (18) das virtuelle Modell jedes ausgewählten Bauteils (4) in seinem Bedienungsfeld (20) anzuzeigen.

3. System (13) nach Anspruch 2, **dadurch gekennzeichnet, dass** die Formerfassungsvorrichtung (22) eine stereoskopische Kamera ist, die zum Beobachtungsbereich (7) weist.

4. System (13) nach einem der Ansprüche 1 bis 3, **dadurch gekennzeichnet, dass** in der Datenbank (21) ein dreidimensionales virtuelles Gesichtsmodell (24) gespeichert ist, das einen Ausgangspunkt (0) der Blickrichtung umfasst, und dass die Master-Kontrolleinheit (14) programmiert ist, im Schritt der Berechnung der Sichtlinie entsprechend der Blickrichtung des Bedieners (8) die folgenden Vorgänge auszuführen:
- Erfassen, auf dem Gesicht des Bedieners, von Entsprechungspunkten mit dem virtuellen Gesichtsmodell (24),
- Berechnen der Raumkoordinaten der Entsprechungspunkte,
- räumliches Ausrichten des virtuellen Gesichtsmodells (24) auf die Koordinaten der Entsprechungspunkte,
- Berechnen der Koordinaten des Ausgangspunkts (0) der Blickrichtung,
- Berechnen der Koordinaten eines Fingerimpulspunkts des Bedieners auf der grafischen Schnittstelle (18),
- ausgehend von den Koordinaten des Ausgangspunkts (0) der Blickrichtung und den Koordinaten des Fingerimpulspunkts des Bedieners (8) auf der grafischen Schnittstelle (18), Berechnen der diese zwei Punkte verbindenden Geraden.

5. System (13) nach einem der Ansprüche 1 bis 4, **dadurch gekennzeichnet, dass** die vorbestimmte Aktivierungsaktion ein Fingerimpuls des Bedieners (8) auf der grafischen Schnittstelle (18) ist.

6. Maschine (1), die mit einem Gestell (2) versehen ist, das eine Arbeitsumgebung (3) begrenzt, die Funktionsbauteile (4) der Maschine (1) umfasst, wobei dieses Gestell (2) eine durchsichtige Glasscheibe (6) trägt, die die Arbeitsumgebung (3) von einem Beobachtungsbereich (7) trennt, wobei diese Maschine (1) **dadurch gekennzeichnet ist, dass** sie mit einem Steuersystem (13) nach einem der vorhergehenden Ansprüche ausgestattet ist, dessen berührungsempfindliche Schnittstelle (18) in die Glasscheibe (6) integriert ist.

7. Steuerverfahren einer Maschine (1), die mit einem Gestell (2) versehen ist, das eine Arbeitsumgebung (3) begrenzt, die Funktionsbauteile (4) der Maschine (1) umfasst, wobei dieses Gestell (2) eine durchsichtige Glasscheibe (6) trägt, die die Arbeitsumgebung (3) von einem Beobachtungsbereich (7) trennt, wobei dieses Verfahren **dadurch gekennzeichnet ist, dass** es die folgenden Schritte enthält:
- Erfassen des Gesichts eines Bedieners (8);
- Berechnen einer Sichtlinie entsprechend einer Blickrichtung des Bedieners (8);
- ausgehend von gespeicherten Stellungen der Bauteile (4) und der berechneten Sichtlinie, Erkennen mindestens eines in der Sichtlinie befindlichen Bauteils (4);
- Anzeigen auf einer in die Glasscheibe (6) integrierten grafischen Schnittstelle (18) mindestens eines Bedienungsfelds (20) sowie des dreidimensionalen virtuellen Modells des erkannten Bauteils (4).

8. Steuerverfahren nach Anspruch 7, **dadurch gekennzeichnet, dass** der Schritt des Berechnens der Sichtlinie die folgenden Vorgänge enthält:
- Erfassen, auf dem Gesicht des Bedieners (8), von Entsprechungspunkten mit einem gespeicherten virtuellen Gesichtsmodell (24), das einen Ausgangspunkt (0) der Blickrichtung hat,
- Berechnen der Raumkoordinaten der Entsprechungspunkte,
- räumliches Ausrichten des virtuellen Modells (24) auf die Koordinaten der Entsprechungspunkte,
- Berechnen der Koordinaten des Ausgangspunkts (0) der Blickrichtung,
- Berechnen der Koordinaten eines Fingerimpulspunkts des Bedieners (8) auf der grafischen Schnittstelle (18),
- ausgehend von den Koordinaten des Ausgangspunkts (0) der Blickrichtung und den Koordinaten des Fingerimpulspunkts des Bedieners (8) auf der grafischen Schnittstelle (18), Berechnen der diese zwei Punkte verbindenden Geraden.

9. Steuerverfahren nach Anspruch 7 oder Anspruch 8, **dadurch gekennzeichnet, dass** es einen Schritt des Vergleichs des Gesichts des Bedieners (8) mit einer Reihe von gespeicherten Gesichtern enthält.

## Claims

1. System (13) for controlling a machine (1) equipped with a casing (2) that delimits a working environment (3) including functional components (4) of said machine (1), this casing (2) containing a transparent window (6) that separates the working environment (3) from an observation area (7), this system (13) including:
- a master control unit (14);
- slave controllers (16) servo-controlled by the master control unit (14) and each driving a functional component (4);
- a tactile graphical interface (18) linked to the master control unit (14) and integrated into the window (6) of the machine (1), the master control unit (14) being programmed to display, on the interface (18), panels (20) for controlling the components (4), each panel including at least one interactive function for controlling the corresponding component (4), and to control the component (4) via its controller (16) in response to the tactile activation of at least one interactive function;
this control system (13) being **characterized in that** it comprises:
- a database (21) in which at least the positions of the components (4) in the working environment (3) are stored in memory;
- a shape acquisition device (22) for detecting an operator (8) in the observation area (7);
- and **in that** the master control unit (14) is programmed to carry out the sequence of following steps, starting from an instant in time when a predetermined activation action of the operator (8) is detected:
∘ calculating a line of sight corresponding to a direction of gaze of the operator (8) by taking account of data originating from the shape acquisition device (22);
∘ on the basis of the positions, stored in memory, of the components (4) and of the calculated line of sight, identifying at least one component (4) situated in the line of sight;
∘ displaying, on the graphical interface (18), at least one panel (20) for controlling the identified component (4).

2. Control system (13) according to Claim 1, **characterized in that** it comprises:
- three-dimensional virtual models of each component (4) that are stored in memory in the database (21),
the master control unit (14) being programmed to display, on the tactile interface (18), the virtual model of any selected component (4) in its control panel (20).

3. System (13) according to Claim 2, **characterized in that** the shape acquisition device (22) is a stereoscopic camera pointing towards the observation area (7).

4. System (13) according to one of Claims 1 to 3, **characterized in that** a three-dimensional virtual facial model (24), including a point (0) of origin of the direction of gaze, is stored in memory in the database (21), and **in that** the master control unit (14) is programmed to carry out, during the step of calculating the line of sight corresponding to the direction of gaze of the operator (8), the following operations:
- detecting, on the face of the operator, points of correspondence with the virtual facial model (24),
- calculating the spatial coordinates of the points of correspondence,
- spatially calibrating the virtual facial model (24) with the coordinates of the points of correspondence,
- calculating the coordinates of the point (0) of origin of the direction of gaze,
- calculating the coordinates of a point of pressing of a finger of the operator on the graphical interface (18),
- on the basis of the coordinates of the point (0) of origin of the direction of gaze and of the coordinates of the point of pressing of a finger of the operator (8) on the graphical interface (18), calculating the straight line joining these two points.

5. System (13) according to one of Claims 1 to 4, **characterized in that** the predetermined activation action is a press of a finger of the operator (8) on the graphical interface (18).

6. Machine (1) equipped with a casing (2) that delimits a working environment (3) including functional components (4) of said machine (1), this casing (2) containing a transparent window (6) that separates the working environment (3) from an observation area (7), this machine (1) being **characterized in that** it is equipped with a control system (13) **according to one of the preceding claims,** the tactile interface (18) of which control system is integrated into the window (6).

7. Method for controlling a machine (1) equipped with a casing (2) that delimits a working environment (3) including functional components (4) of said machine (1), this casing (2) containing a transparent window (6) that separates the working environment (3) from an observation area (7), this method being **characterized in that** it comprises the following steps:
- detecting the face of an operator (8);
- calculating a line of sight corresponding to a direction of gaze of the operator (8);
- on the basis of the positions, stored in memory, of the components (4) and of the calculated line of sight, identifying at least one component (4) situated in the line of sight;
- displaying, on a graphical interface (18) integrated into the window (6), at least one control panel (20) and the three-dimensional virtual model of the identified component (4).

8. Control method according to Claim 7, **characterized in that** the step of calculating the line of sight comprises the following operations:
- detecting, on the face of the operator (8), points of correspondence with a virtual facial model (24) stored in memory and having a point (0) of origin of the direction of gaze,
- calculating the spatial coordinates of the points of correspondence,
- spatially calibrating the virtual model (24) with the coordinates of the points of correspondence,
- calculating the coordinates of the point (0) of origin of the direction of gaze,
- calculating the coordinates of a point of pressing of a finger of the operator (8) on the graphical interface (18),
- on the basis of the coordinates of the point (0) of origin of the direction of gaze and of the coordinates of the point of pressing of a finger of the operator (8) on the graphical interface (18), calculating the straight line joining these two points.

9. Control method according to Claim 7 or Claim 8, **characterized in that** it comprises a step of comparing the face of the operator (8) with a series of faces that are stored in memory.
